# DEMANDE DE BREVET EUROPEEN

(11) **EP 4 358 423 A1**
(43) Date de publication de la demande: **24.04.2024**
(21) Numéro de dépôt: 23201340.9
(22) Date de dépôt: 03.10.2023
(51) Int. Cl.: H04B 5/00, H04B 5/40

(54) **ADAPTATION D'UNE TENSION DE COMMANDE**

(30) Priorité: 18.10.2022 FR 2210719
(71) Demandeur: STMicroelectronics International N.V., 1228 Plan-les-Ouates, Geneva (CH)
(72) Inventeur: TRAMONI, Alexandre, 83330 LE BEAUSSET (FR)
(74) Mandataire: Cabinet Beaumont

(57) **Abrégé**

La présente description concerne un dispositif électronique comprenant :
- une batterie (201) adaptée à fournir une tension d'alimentation (Vbat) ;
- un circuit convertisseur de tension (202) commandable adapté à fournir une tension de commande (Vdd) à partir de ladite tension d'alimentation (Vbat) ;
- un module de communication en champ proche comportant au moins une antenne (207) configurée pour émettre un champ électromagnétique dont la puissance est adaptée à être commandée par ladite tension de commande (Vdd) ; et
- des moyens de mesure de la température,
dans lequel ledit convertisseur de tension (202) est adapté à modifier la valeur de ladite tension de commande (Vdd) en fonction d'une mesure de la température.

## Description

### Domaine technique

La présente description concerne de façon générale les systèmes et dispositifs électroniques, et en particulier les systèmes et dispositifs électroniques adaptés à mettre en oeuvre des communications sans fil, comme des communications en champ proche (NFC, Near Field Communication).

### Technique antérieure

Les communications sans fil sont de plus en plus utilisées de nos jours pour différentes applications telles que des échanges d'informations, des paiements bancaires, des échanges d'énergie, etc. Il existe plusieurs types de communication sans fil, par exemple, les communications en champ proche (Near Field Communication, NFC), les communications utilisant des hautes fréquences à plus longue distance comme les communications Bluetooth, etc.

Il serait souhaitable de pouvoir améliorer, au moins en partie, les dispositifs électroniques mettant en oeuvre des communications sans fil, et plus particulièrement, des communications en champ proche.

### Résumé de l'invention

Il existe un besoin pour des dispositifs électroniques adaptés à modifier les caractéristiques de la communication sans fil qu'ils mettent en oeuvre en fonction de la température.

Il existe un besoin pour des dispositifs électroniques adaptés à modifier les caractéristiques de la communication en champ proche qu'ils mettent en oeuvre en fonction de la température.

Il existe un besoin pour des dispositifs électroniques adaptés à modifier le champ électromagnétique qu'ils émettent en fonction de la température.

Un mode de réalisation pallie tout ou partie des inconvénients des dispositifs électroniques connus adaptés à mettre en oeuvre des communications en champ proche.

Un mode de réalisation prévoit un dispositif électronique comprenant :
- une batterie adaptée à fournir une tension d'alimentation ;
- un circuit convertisseur de tension commandable adapté à fournir une tension de commande à partir de ladite tension d'alimentation ;
- un module de communication en champ proche comportant au moins une antenne configurée pour émettre un champ électromagnétique dont la puissance est adaptée à être commandée par ladite tension de commande ; et
- des moyens de mesure de la température,
dans lequel ledit convertisseur de tension est adapté à modifier la valeur de ladite tension de commande en fonction d'une mesure de la température.

Un autre mode de réalisation prévoit un procédé d'adaptation d'une tension de commande d'un dispositif électronique comprenant :
- une batterie adaptée à fournir une tension d'alimentation ;
- un circuit convertisseur de tension commandable adapté à fournir une tension de commande à partir de ladite tension d'alimentation ;
- un module de communication en champ proche comportant au moins une antenne configurée pour émettre un champ électromagnétique dont la puissance est adaptée à être commandée par ladite tension de commande ; et
- des moyens de mesure de la température,
dans lequel ledit procédé comprend les étapes suivantes :
- mesurer la température ; et
- modifier la valeur de ladite tension de commande.

Selon un mode de réalisation, à un état initial ladite tension de commande est fixée en fonction de la mesure de la température.

Selon un mode de réalisation, ladite valeur de ladite tension de commande est choisie en utilisant une table de correspondance.

Selon un mode de réalisation, à un état initial ladite tension de commande est fixée à une valeur maximale.

Selon un mode de réalisation, la valeur maximale est de l'ordre de 8 V.

Selon un mode de réalisation, à un état initial ladite tension de commande est fixée à une valeur minimale.

Selon un mode de réalisation, la valeur minimale est de l'ordre de 5 V.

Selon un mode de réalisation, après l'état initial, si la température est supérieure à une température maximale, la valeur de ladite tension de commande est diminuée.

Selon un mode de réalisation, après l'état initial, ladite température est comparée à la température maximale, si la température est inférieure à la température maximale, la valeur de ladite tension de commande est augmentée.

Selon un mode de réalisation, la température est mesurée périodiquement.

Selon un mode de réalisation, la période de mesure de la température est comprise entre 5 s et 1 min.

Selon un mode de réalisation, ladite antenne est adaptée à émettre un champ après que la valeur de ladite tension de commande a été modifiée.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un mode de réalisation d'un dispositif électronique ;
la figure 2 représente, très schématiquement et sous forme de blocs, une partie du dispositif électronique de la figure 1 pouvant mettre en oeuvre les modes de réalisation des figures 3 à 6 ;
la figure 3 représente un schéma-bloc illustrant un premier mode de mise en oeuvre d'un procédé d'adaptation d'une tension ;
la figure 4 représente un schéma-bloc illustrant un deuxième mode de mise en oeuvre d'un procédé d'adaptation d'une tension ;
la figure 5 représente un schéma-bloc illustrant un troisième mode de mise en oeuvre d'un procédé d'adaptation d'une tension ; et
la figure 6 représente un schéma-bloc illustrant un quatrième mode de mise en oeuvre d'un procédé d'adaptation d'une tension.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des protocoles de communication en champ proche ne sont pas décrits ici, les protocoles de communication en champ proche usuels sont compatibles avec les modes de réalisation décrits ci-après.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

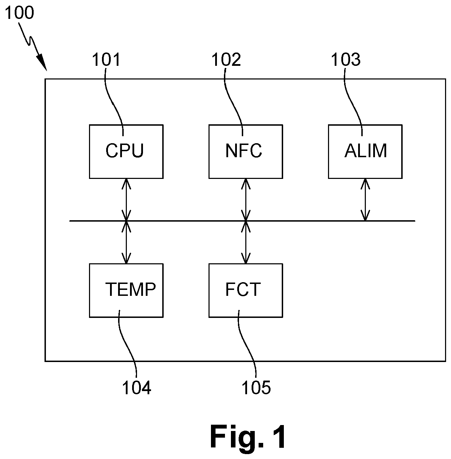

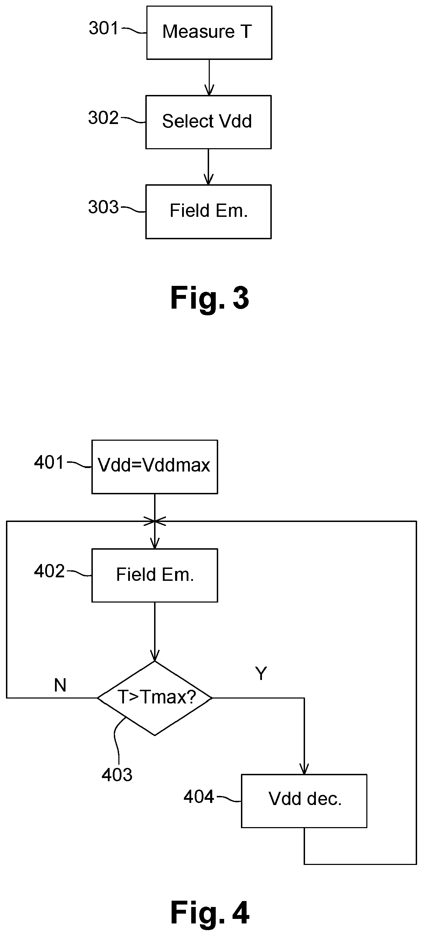

La figure 1 représente, très schématiquement et sous forme de blocs, un exemple d'un dispositif électrique 100 auquel peuvent s'appliquer les modes de réalisation décrits en relation avec les figures 3 à 6.

Le dispositif 100 est un dispositif électronique adapté à mettre en oeuvre une communication sans fil, et qui est tout particulièrement adapté mettre en oeuvre une communication en champ proche (NFC, Near Field Communication).

Le dispositif 100 comprend un processeur 101 (CPU) permettant de traiter des données. Selon un exemple, le dispositif 100 peut comprendre plusieurs processeurs adaptés chacun à traiter différents types de données. Selon un exemple particulier, le dispositif 100 peut comprendre un processeur principal et un ou plusieurs processeurs secondaires.

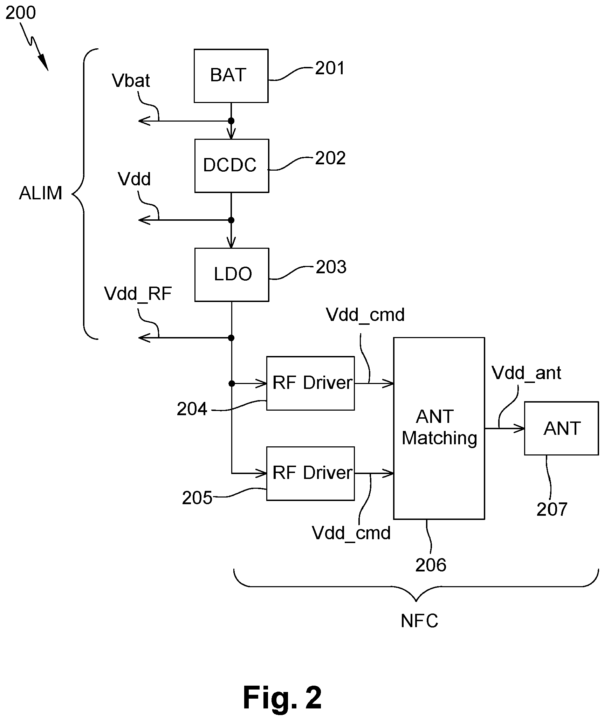

Le dispositif 100 comprend, en outre, un module de communication en champ proche 102 (NFC), ou module NFC (102). Les technologies de communication en champs proche (NFC - Near Field Communication) permettent de réaliser des communications à haute fréquence et à courte portée. De tels systèmes exploitent un champ électromagnétique radiofréquence émis par un dispositif (terminal ou lecteur) pour communiquer avec un autre dispositif (module distant, transpondeur ou carte). Le module NFC 102 comporte divers circuits électroniques adapté à émettre un signal radiofréquence (RF) transmis à l'aide d'un champ électromagnétique émis par une antenne d'un circuit oscillant/résonnant. Des circuits compris dans le module 102 sont décrits plus en détails en relation avec la figure 2.

Le dispositif 100 comprend, en outre, un ou plusieurs circuits 103 (ALIM) prenant en charge l'alimentation en énergie du dispositif 100. Selon un exemple, les circuits 104 peuvent comprendre une ou plusieurs batteries, des circuits de conversion d'énergie, des circuits de charge, etc. Selon un mode de réalisation, les circuits 103 comprennent au moins une batterie fournissant une tension d'alimentation utilisée pour commander le module NFC 102. Des circuits compris dans les circuits 103 sont décrits plus en détails en relation avec la figure 2.

Le dispositif 100 comprend, en outre, un ou plusieurs moyens 104 de mesure de la température (TEMP). Selon un premier exemple, ces moyens 104 sont des moyens matériels, c'est-à-dire un ou plusieurs circuits, ou capteurs, de température. Selon un deuxième exemple, ces moyens 104 sont des moyens logiciels de mesure de la température. Les moyens 104 sont, par exemple, adaptés à mesurer la température ambiante entourant le dispositif 100, et/ou adaptées à mesurer la température au niveau des éléments composant le dispositif 100, comme par exemple la température au niveau du module NFC 102.

Le dispositif 100 comprend, en outre, un ou plusieurs circuits 105 (FCT) mettant en oeuvre une ou plusieurs fonctionnalités du dispositif 100. Selon un exemple, les circuits 105 peuvent comprendre des mémoires, des circuits de traitement spécifiques de données, comme des circuits de chiffrement, des circuits permettant d'effectuer des mesures, des circuits d'entrée/sortie du dispositif 100.

Le dispositif 100 comprend, en outre, un ou plusieurs bus de communication 106 permettant à tous les circuits du dispositif 100 de communiquer. En figure 1, un seul bus 106 reliant le processeur 101, le module 102, et les circuits 103 à 105 est représenté, mais en pratique, le dispositif 100 peut comprendre plusieurs bus de communication reliant ces différents éléments.

La figure 2 représente, très schématiquement et sous forme de blocs, une partie 200 du dispositif 100 décrit en relation avec la figure 1.

La partie 200 correspond à une partie du module NFC 102 du dispositif 100 et à une partie des circuits d'alimentation 103 du dispositif 100. Plus particulièrement, la partie 200 correspond à la partie du dispositif 100 permettant de fournir un champ électromagnétique par l'intermédiaire d'une antenne.

Comme dit précédemment, la partie 200 comprend une portion ALIM des circuits d'alimentation 102. Cette portion ALIM comprend :
- une batterie 201 (BAT) ;
- un circuit convertisseur de tension 202 (DCDC) ; et
- un circuit régulateur de tension 203 (LDO).

La batterie 201 est une des batteries du dispositif 100. Selon un exemple, la batterie 201 est la batterie principale du dispositif 100. Selon un autre exemple, la batterie 201 est une batterie dédiée à l'alimentation du module NFC 102. La batterie 201 est adaptée à fournir une tension d'alimentation Vbat. La tension d'alimentation Vbat est, par exemple, comprise entre 1 et 7 V, par exemple entre 2,6 et 5,1 V.

Le circuit convertisseur de tension 202, ou convertisseur 202, est adapté à convertir une tension continue en une autre tension continue. Plus particulièrement, le circuit 202 est un convertisseur boost, c'est-à-dire un convertisseur adapté à fournir, à partir d'une première tension continue, une deuxième tension continue dont la valeur est plus élevée que celle de la première tension. Le convertisseur 202 est adaptée à fournir une tension de commande Vdd à partir de la tension d'alimentation Vbat fournie par la batterie 201. De plus, et selon un mode de réalisation, le convertisseur 202 est un convertisseur commandable, c'est-à-dire un convertisseur dont la valeur de la tension de sortie, ici la tension de commande Vdd, est commandable. Plus particulièrement, le convertisseur 202 est adaptée à fournir en sortie la tension de commande Vdd dont la valeur peut varier, en fonction de la commande reçue, entre une valeur minimale Vddmin et une valeur maximale Vddmax. Selon un exemple, le convertisseur 202 est adapté à fournir en sortie une tension comprise entre 5 et 10 V, par exemple entre 6 et 8 V.

Le circuit régulateur de tension 203, ou régulateur 203 est un régulateur linéaire d'une tension continue recevant la tension de commande Vdd fournie par le convertisseur 202. Le régulateur 203 fournit en sortie une tension Vdd_RF correspondant à la différence entre la tension de commande Vdd et une tension de seuil Vldo. Selon un exemple, la tension de seuil Vldo est de l'ordre de 0,2 V. Selon un mode de réalisation, le régulateur 203 est optionnel. Le régulateur 203 peut permettre de supprimer le bruit présent sur la tension de commande Vdd.

Comme dit précédemment, la partie 200 comprend une portion NFC du module NFC. Cette portion NFC comprend :
- des circuits de pilotage 204 (RF Driver) et 205 (RF Driver) ;
- un circuit d'adaptation d'impédance (ANT Matching) 206 ; et
- une antenne 207 (ANT).

Les circuits de pilotage 204 et 205 sont des circuits de pilotage de l'antenne 207. Les circuits 204 et 205 reçoivent la tension Vdd_RF de sortie du régulateur 202, ou la tension de commande Vdd lorsque le régulateur 202 est omis, et fournissent une tension de commande adaptée Vdd_cmd.

Le circuit d'adaptation d'impédance (ANT Matching) 206 reçoit les tensions de commande adaptées Vdd_cmd des circuits de pilotage 204 et 205, et fournit en sortie une tension de commande d'antenne Vdd_Ant dont l'impédance est adaptée à l'impédance de l'antenne 207. La tension Vdd_Ant est dépendante des tensions de commande adaptées Vdd_cmd, dont la valeur dépend de la tension Vdd_RF, ou directement de la tension Vdd le cas échéant.

L'antenne 207 est adaptée à émettre un champ électromagnétique permettant de mettre en oeuvre une communication en champ proche. Ainsi, l'antenne 207 est adapté à émettre et à recevoir des ondes électromagnétiques dont la fréquence est comprise dans le rang des radiofréquences, c'est-à-dire dont la fréquence est comprise entre 3 kHz et 300 GHz. Selon un exemple, l'antenne 207 est adapté à émettre et à recevoir des ondes électromagnétiques dont la fréquence est de l'ordre de 13,56 MHz. L'antenne 207 reçoit la tension Vdd_Ant, et fournit en sortie un champ électromagnétique dont la puissance est dépendante de la valeur de la tension de commande Vdd_Ant, et de fait dépendant de la valeur de la tension de commande Vdd fournie par le convertisseur 202.

La figure 3 est un schéma-bloc illustrant un premier mode de mise en oeuvre d'un procédé d'adaptation de la tension de commande Vdd, décrite en relation avec la figure 2, du dispositif 100 décrit en relation avec la figure 1.

A une étape initiale 301 (Measure T), correspondant à un état initial, l'antenne 207 n'émet aucun champ électromagnétique, mais reçoit une requête indiquant qu'elle doit en émettre un pour mettre en oeuvre une communication NFC. L'antenne 207 recevant donc une commande pour émettre un champ électromagnétique, les moyens 104 du dispositif 100 sont mis en oeuvre pour mesurer la température du dispositif 100, qui correspond, dans ce cas, à la température ambiante Tamb autour du dispositif 100, puisque le module NFC n'est pas en fonctionnement et ne produit donc pas de chaleur.

A une étape 302 (Select Vdd), postérieure à l'étape 301, la valeur de la tension de commande Vdd fournie par le convertisseur 202 est choisie en fonction de la valeur de la température T mesurée, et ainsi la puissance du champ à émettre par l'antenne 207 est choisi en fonction de la température. Pour cela, le dispositif 100 peut utiliser une table de correspondance indiquant la valeur de tension appropriée à la tension Vdd fournie. Une fois la valeur de la tension Vdd choisie, le convertisseur 202 est commandé pour fournir la valeur en question.

A une étape 303 (Field Em.), postérieure à l'étape 302, la valeur de tension Vdd étant fixée, l'antenne 207 peut commencer à émettre un champ électromagnétique dont la puissance est configurée en utilisant la tension Vdd comme décrit en relation avec la figure 2.

Un avantage de ce mode de réalisation est qu'il permet d'éviter les surchauffes du dispositif 100. En effet, émettre un champ électromagnétique à pleine puissance peut provoquer une hausse de la température des circuits et composants du dispositif 100, réduire sa puissance lorsque la température est déjà élevée permet d'éviter d'augmenter encore plus cette température.

La figure 4 est un schéma-bloc illustrant un deuxième mode de mise en oeuvre d'un procédé d'adaptation de la tension de commande Vdd, décrite en relation avec la figure 2, du dispositif 100 décrit en relation avec la figure 1.

A une étape initiale 401 (Vdd=Vddmax), correspondant à un état initial, l'antenne 207 n'émet aucun champ électromagnétique, mais reçoit une requête indiquant qu'elle doit en émettre un pour mettre en oeuvre une communication NFC. L'antenne 207 recevant donc une commande pour émettre un champ électromagnétique, la tension de commande Vdd est fixée à sa valeur maximale Vddmax. Pour cela, le convertisseur 202 est commandé pour fournir la valeur de tension en question.

A une étape 402 (Field Em.), postérieure à l'étape 401, la valeur de tension Vdd étant fixée, l'antenne 207 peut commencer à émettre un champ électromagnétique dont la puissance est configurée en utilisant la tension Vdd comme décrit en relation avec la figure 2.

A une étape 403 (T>Tmax), postérieure à l'étape 402, l'antenne 207 émet un champ électromagnétique, et la température T du dispositif 100 est mesurée par les moyens 104. Cette température T est comparée à une température maximale Tmax. Selon un mode de réalisation, cette étape a lieu périodiquement, par exemple toutes les 5 s à 1 min. Si la température T est inférieure à la température maximale Tmax (sortie Y de l'étape 403), alors le dispositif continue de fonctionner sans modification, et si la température T devient supérieure à la température maximale Tmax (sortie N de l'étape 403), l'étape suivante est une étape 404 (Vdd dec.).

A l'étape 404, la puissance du champ électromagnétique émis par l'antenne 207 est diminuée en diminuant la tension Vdd. Pour cela, une commande est envoyée au circuit convertisseur 202. Selon un exemple, la tension de commande Vdd est diminuée par palier, par exemple par palier de 0.8 V.

Ce deuxième mode de mise en oeuvre présente le même avantage que le premier mode de mise en oeuvre décrit en relation avec la figure 4, mais présente aussi l'avantage de permettre une adaptation de la puissance du champ électromagnétique pendant l'émission dudit champ.

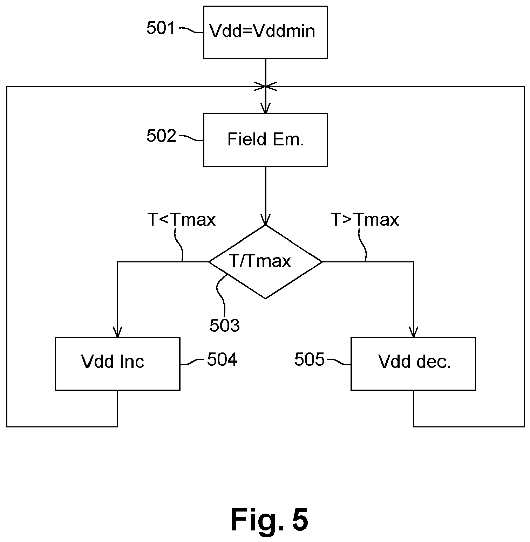

La figure 5 est un schéma-bloc illustrant un troisième mode de mise en oeuvre d'un procédé d'adaptation de la tension de commande Vdd, décrite en relation avec la figure 2, du dispositif 100 décrit en relation avec la figure 1.

A une étape initiale 501 (Vdd=Vddmin), correspondant à un état initial, l'antenne 207 n'émet aucun champ électromagnétique, mais reçoit une requête indiquant qu'elle doit en émettre un pour mettre en oeuvre une communication NFC. L'antenne 207 recevant donc une commande pour émettre un champ électromagnétique, la tension de commande Vdd est fixée à sa valeur minimale Vddmin. Pour cela, le convertisseur 202 est commandé pour fournir la valeur de tension en question.

A une étape 502 (Field Em.), (Field Em.), postérieure à l'étape 501, la valeur de tension Vdd étant fixée, l'antenne 207 peut commencer à émettre un champ électromagnétique dont la puissance est configurée en utilisant la tension Vdd comme décrit en relation avec la figure 2.

A une étape 503 (T/Tmax), postérieure à l'étape 402, l'antenne 207 émet un champ électromagnétique, et la température T du dispositif 100 est mesurée par les moyens 104. Cette température T est comparée à une température maximale Tmax. Selon un mode de réalisation, cette étape a lieu périodiquement, par exemple toutes les 5 s à 1 min. Si la température T est inférieure à la température maximale Tmax (sortie T<Tmax de l'étape 503), alors l'étape suivante est une étape 504 (Vdd inc.), et si la température T devient supérieure à la température maximale Tmax (sortie T>Tmax de l'étape 503), l'étape suivante est une étape 505 (Vdd dec.).

A l'étape 504, la puissance du champ électromagnétique émis par l'antenne 207 est augmentée en augmentant la tension Vdd. Pour cela, une commande est envoyée au circuit convertisseur 202. Selon un exemple, la tension de commande Vdd est augmentée par palier, par exemple par palier de 0.8 V.

A l'étape 505, la puissance du champ électromagnétique émis par l'antenne 207 est diminuée en diminuant la tension Vdd. Pour cela, une commande est envoyée au circuit convertisseur 202. Selon un exemple, la tension de commande Vdd est diminuée par palier, par exemple par palier de 0.8 V.

Ce troisième mode de mise en oeuvre présente les même avantages que les premier et deuxième modes de mise en oeuvre décrit en relation avec les figures 4 et 5.

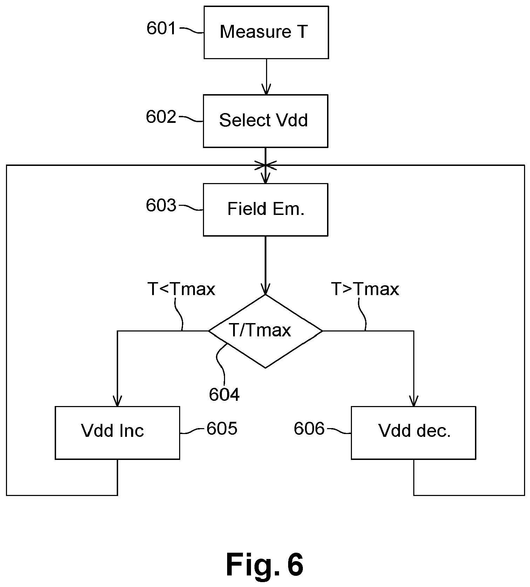

La figure 6 est un schéma-bloc illustrant un quatrième mode de mise en oeuvre d'un procédé d'adaptation de la tension de commande Vdd, décrite en relation avec la figure 2, du dispositif 100 décrit en relation avec la figure 1.

A une étape initiale 601 (Measure T), correspondant à un état initial, l'antenne 207 n'émet aucun champ électromagnétique, mais reçoit une requête indiquant qu'elle doit en émettre un pour mettre en oeuvre une communication NFC. L'antenne 207 recevant donc une commande pour émettre un champ électromagnétique, les moyens 104 du dispositif 100 sont mis en oeuvre pour mesurer la température du dispositif 100, correspondant ici à la température ambiante comme dans le mode de mise en oeuvre de la figure 3.

A une étape 602 (Select Vdd), postérieure à l'étape 601, la valeur de la tension de commande Vdd fournie par le convertisseur 202 est choisie en fonction de la valeur de la température T mesurée. Pour cela, le dispositif 100 peut utiliser une table de correspondance indiquant la valeur de tension appropriée à la tension Vdd fournie. Une fois la valeur de la tension Vdd choisie, le convertisseur 202 est commandé pour fournir la valeur en question.

A une étape 603 (Field Em.), postérieure à l'étape 602, la valeur de tension Vdd étant fixée, l'antenne 207 peut commencer à émettre un champ électromagnétique dont la puissance est configurée en utilisant la tension Vdd comme décrit en relation avec la figure 2.

A une étape 604 (T/Tmax), postérieure à l'étape 603, l'antenne 207 émet un champ électromagnétique, et la température T du dispositif 100 est mesurée par les moyens 104. Cette température T est comparée à une température maximale Tmax. Selon un mode de réalisation, cette étape a lieu périodiquement, par exemple toutes les 5 s à 1 min. Si la température T est inférieure à la température maximale Tmax (sortie T<Tmax de l'étape 604), alors l'étape suivante est une étape 605 (Vdd inc.), et si la température T devient supérieure à la température maximale Tmax (sortie T>Tmax de l'étape 604), l'étape suivante est une étape 606 (Vdd dec.).

A l'étape 605, la puissance du champ électromagnétique émis par l'antenne 207 est augmentée en augmentant la tension Vdd. Pour cela, une commande est envoyée au circuit convertisseur 202. Selon un exemple, la tension de commande Vdd est augmentée par palier, par exemple par palier de 0.8 V.

A l'étape 606, la puissance du champ électromagnétique émis par l'antenne 207 est diminuée en diminuant la tension Vdd. Pour cela, une commande est envoyée au circuit convertisseur 202. Selon un exemple, la tension de commande Vdd est diminuée par palier, par exemple par palier de 0.8 V.

Ce quatrième mode de mise en oeuvre présente les même avantages que les premier, deuxième et troisième modes de mise en oeuvre décrit en relation avec les figures 4 à 6.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le mode de mise en oeuvre de la figure 4 peut présenter une étape de diminution de la tension de commande Vdd comme le mode de mise en oeuvre de la figure 5.

Enfin, la mise en oeuvre pratique des modes de réalisation et variantes décrits est à la portée de la personne du métier à partir des indications fonctionnelles données ci-dessus.

## Revendications

1. Dispositif électronique (100) comprenant :
- une batterie (201) adaptée à fournir une tension d'alimentation (Vbat) ;
- un circuit convertisseur de tension (202) commandable adapté à fournir une tension de commande (Vdd) à partir de ladite tension d'alimentation (Vbat) ;
- un module de communication en champ proche (102) comportant au moins une antenne (207) configurée pour émettre un champ électromagnétique dont la puissance est adaptée à être commandée par ladite tension de commande (Vdd) ; et
- des moyens (104) de mesure de la température (T), dans lequel ledit convertisseur de tension (202) est adapté à modifier la valeur de ladite tension de commande (Vdd) en fonction d'une mesure de la température (T).

2. Procédé d'adaptation d'une tension de commande (Vdd) d'un dispositif électronique (100) comprenant :
- une batterie (201) adaptée à fournir une tension d'alimentation (Vbat) ;
- un circuit convertisseur de tension (202) commandable adapté à fournir une tension de commande (Vdd) à partir de ladite tension d'alimentation (Vbat) ;
- un module de communication en champ proche (102) comportant au moins une antenne (207) configurée pour émettre un champ électromagnétique dont la puissance est adaptée à être commandée par ladite tension de commande (Vdd) ; et
- des moyens (104) de mesure de la température (T),
dans lequel ledit procédé comprend les étapes suivantes :
- mesurer la température (T) ; et
- modifier la valeur de ladite tension de commande (Vdd).

3. Dispositif selon la revendication 1, ou procédé selon la revendication 2, dans lequel à un état initial ladite tension de commande (Vdd) est fixée en fonction de la mesure de la température.

4. Dispositif ou procédé selon la revendication 3, dans lequel ladite valeur de ladite tension de commande (Vdd) est choisie en utilisant une table de correspondance.

5. Dispositif selon l'une quelconque des revendications 1, 3 ou 4, ou procédé selon l'une quelconque des revendications 2 à 4, dans lequel à un état initial ladite tension de commande (Vdd) est fixée à une valeur maximale (Vddmax).

6. Dispositif ou procédé selon la revendication 5, dans lequel la valeur maximale est de l'ordre de 8 V.

7. Dispositif selon l'une quelconque des revendications 1, 3 ou 4, ou procédé selon l'une quelconque des revendications 2 à 4, dans lequel à un état initial ladite tension de commande (Vdd) est fixée à une valeur minimale (Vddmin).

8. Dispositif ou procédé selon la revendication 7, dans lequel la valeur minimale est de l'ordre de 5 V.

9. Dispositif selon l'une quelconque des revendications 1, 3 à 8, ou procédé selon l'une quelconque des revendications 2 à 8, dans lequel, après l'état initial, si la température (T) est supérieure à une température maximale (Tmax), la valeur de ladite tension de commande (Vdd) est diminuée.

10. Dispositif selon l'une quelconque des revendications 1, 3 à 9, ou procédé selon l'une quelconque des revendications 2 à 9, dans lequel, après l'état initial, ladite température est comparée à la température maximale, si la température (T) est inférieure à la température maximale (Tmax), la valeur de ladite tension de commande (Vdd) est augmentée.

11. Dispositif selon l'une quelconque des revendications 1, 3 à 10, ou procédé selon l'une quelconque des revendications 2 à 10, dans lequel la température (T) est mesurée périodiquement.

12. Dispositif ou procédé selon la revendication 11, dans lequel la période de mesure de la température est comprise entre 5 s et 1 min.

13. Dispositif selon l'une quelconque des revendications 1, 3 à 12, ou procédé selon l'une quelconque des revendications 2 à 12, dans lequel ladite antenne est adaptée à émettre un champ après que la valeur de ladite tension de commande (Vdd) a été modifiée.
